# EUROPÄISCHE PATENTSCHRIFT

(11) **EP 0 617 253 B1**
(45) Veröffentlichungstag und Bekanntmachung des Hinweises auf die Patenterteilung: **10.06.1998**
(21) Anmeldenummer: 94103464.7
(22) Anmeldetag: 08.03.1994
(51) Int. Cl.: G01B 5/20, G01B 7/28

(54) **Messvorrichtung zum Vermessen der Form von Zylindern**
Measuring device for determining the cylinder form
Dispositif de mesure pour déterminer la forme des cylindres

(30) Priorität: 20.03.1993 DE 4309082
(43) Veröffentlichungstag der Anmeldung: 28.09.1994
(73) Patentinhaber: PIETZSCH AUTOMATISIERUNGSTECHNIK GMBH, 76275 Ettlingen (DE)
(72) Erfinder: Overlach, Knud, Dr., D-76275 Ettlingen (DE); Wamser, Manfred, D-76137 Karlsruhe (DE)
(74) Vertreter: Geitz, Heinrich, Dr.-Ing.

(56) Entgegenhaltungen:
- EP-A- 0 177 284
- EP-A- 0 256 392
- DE-C- 3 024 331
- FR-A- 1 544 088
- FR-A- 2 298 084
- GB-A- 2 019 576
- PATENT ABSTRACTS OF JAPAN vol. 16, no. 199 (P-1351) 13. Mai 1992 & JP-A-04 031 710 (TOSHIBA CORP.) 3. Februar 1992
- PATENT ABSTRACTS OF JAPAN vol. 9, no. 308 (P-410) 4. Dezember 1985 & JP-A-60 140 110 (MITSUBISHI DENKI KK) 25. Juli 1985

## Beschreibung

Die Erfindung bezieht sich auf eine Meßvorrichtung zum Vermessen der Form von Zylindern, die einen am Ende eines mittels Antriebsmotoren translatorisch und rotatorisch bewegbaren Antriebsarms achsparallel zu letzterem angeordneten Meßfühler mit einem Taster zum Abtasten der Geometrie von Zylinderwandungen besitzt.

Es ist bereits eine Meßvorrichtung dieser Art bekannt (FR-A-1 544 088), bei der am Ende eines translatorisch bewegbaren Meßarms ein Meßfühler mit einem längs seiner Achse bewegbaren Taststift angeordnet ist. Der Meßfühler ist dabei um eine quer zur Längserstreckung des Meßarms verlaufende Achse am Meßarm angelenkt und mithin mit seinem Taststift auf einer sich um die Anlenkachse herum erstreckenden Kreislinie über einen Umfangswinkel von mehr als 300° verschwenkbar. Angesichts dieser Verschwenkbarkeit können die Wandungen längsseitig geschlitzter Zylinderräume vom Taststift abgetastet werden, nachdem der Meßarm mit dem an seinem Ende angeordneten Meßfühler von der Seite her durch den sich parallel zur Zylinderachse erstreckenden Längsschlitz in einen zu vermessenden Zylinderraum eingeführt ist.

Gänzlich ungeeignet hingegen ist die vorbekannte Meßvorrichtung zum Vermessen peripher geschlossener Zylinderräume.

Es ist auch bereits eine Meßvorrichtung dieser Zweckbestimmung aus der DE-PS 30 24 331 bekannt. Dabei handelt es sich um eine Vorrichtung zum Vermessen des Zylinderverzugs in Zylinderräumen, die einen in derartige Zylinderräume einführbaren und in Umfangsrichtung antreibbaren Meßarm besitzt, auf dem ein längs der Meßarmachse translatorisch antreibbarer Meßfühler mit einem im Gehäuse des Meßfühlers radial geführten Taststift zum Abtasten der Geometrie der Innenwand eines zu vermessenden Zylinders axialbeweglich aufgenommen ist. Der Taststift ist dabei mit einer im Meßfühler angeordneten Blattfeder wirkverbunden, deren Auslenkungen in bekannter Weise mittels Dehnungsmeßstreifen gemessen wird.

Diese vorbekannte Meßvorrichtung hat sich zum Vermessen des Zylinderverzugs von Zylinderräumen und insbesondere zum Vermessen der Zylinder von Brennkraftmaschinen bewährt, erscheint aber hinsichtlich der Meßfühlerausbildung und dessen beträchtlicher Radialausdehnung noch verbesserungsbedürftig.

In der JP-60 140 110 ist schon eine in drei rechtwinklig zueinander verlaufenden Richtungen wirksame Kraftmeßvorrichtung beschrieben. Zentrales Element dieser Vorrichtung ist ein Meßkörper aus einem elastischen Material, wie Elastomer, der an zwei zueinander senkrecht verlaufenden Schwächungszonen mit Dehnungsmeßstreifen ausgerüstet ist. Der Meßkörper ist an einer wiederum zu den beiden vorgenannten Schwächungszonen senkrecht verlaufenden Blattfeder, die ebenfalls mit Dehnungsmeßstreifen versehen ist, befestigt. Diese Kraftmeßvorrichtung ist zur Messung von Zylindergeometrieen ebenfalls nicht geeignet. Darüber hinaus sind die empfindlichen, zur Detektion eingesetzten Meßkomponenten offen zugänglich und es besteht somit eine hohe Beschädigungsgefahr.

Die Aufgabe der vorliegenden Erfindung besteht daher in der Schaffung einer Meßvorrichtung der vorgenannten Zweckbestimmung, die keine außenliegenden Führungsmittel für einen Meßfühler aufweist sowie im Aufbau einfach und sicher vor Beschädigungen ist. Es soll eine in peripher geschlossene Zylinderräume in Richtung der Zylinderachse einführbare Meßvorrichtung geschaffen werden.

Ausgehend von dem oben erläuterten Stande der Technik ist diese Aufgabe dadurch gelöst, daß bei der Meßvorrichtung nach dem Oberbegriff des Patentanspruchs 1 der Meßfühler einen in einem Tastkopf aufgenommenen Meßkörper umfaßt, welcher Meßkörper mit einer Halterung zum biege- und axialfesten, jedoch lösbaren, Einspannen des als langgestreckten Taststift ausgebildeten Tasters versehen und beabstandet von der Halterung für den Taster im Bereich eines Befestigungsabschnitts im Tastkopf fest eingespannt, sowie mit wenigstens einer zwischen der Halterung und dem Befestigungsabschnitt angeordneten, als mit Dehnungsmeßsstreifen ausgerüsteter Federabschnitt ausgebildeten Schwächungszone versehen ist.

Während bei der Meßvorrichtung nach der DE-PS 30 24 331 der Meßfühler längsbeweglich auf einem seinerseits rotatorisch bewegbaren Meßarm geführt ist, besitzt die Meßvorrichtung nach der Erfindung einen am Ende des translatorisch und rotatorisch bewegbaren Antriebsarms angeordneten Tastkopf, in dem ein Meßkörper fest angeordnet ist, von dem sich ein als Taststift ausgebildeter Taster forterstreckt. Dieser Taster ist mit seinem einen Ende in einer geeigneten Halterung des Meßkörpers eingespannt und der Meßkörper besitzt eine als Federabschnitt ausgebildete Schwächungszone, die zwischen der Halterung für den Taster und einem die feste Verbindung des Meßkörpers mit dem Tastkopf vermittelnden Befestigungsabschnitt angeordnet ist.

Der Vorteil einer derartigen Ausbildung der Meßvorrichtung besteht darin, daß der Meßfühler in einem praktisch vollständig geschlossenen Tastkopf aufgenommen ist und daß der mit seinem einen Ende in einer geeigneten Halterung des Meßkörpers eingespannte Taststift, der mit der von der Einspannstelle entfernten Tastspitze an der zu vermessenden Werkstückoberfläche angreift, beim Abtasten der Werkstückoberfläche minimale Schwenkbewegungen um seine Einspannstelle bzw. kleinste translatorische Meßbewegungen ausführt, die ihrerseits Verformungen der als Federabschnitt ausgebildeten Schwächungszone des Meßkörpers hervorrufen.

Im Gegensatz zum Gegenstand der JP-60 140 110, bei dem eine Kraftmessung erfolgt, wird erfindungsgemäß von den Dehnungsmeßstreifen die Auslenkung des Tasters in verschiedene Richtungen erfaßt. Der Tastkopf ist daher so ausgelegt, daß er einen vorbestimmten Auslenkungsradius des Tasters nicht behindert.

Eine zweckmäßige Weiterbildung der Erfindung sieht vor, daß der Meßkörper mit wenigstens zwei beabstandet voneinander angeordneten und rechtwinklig zueinander wirksamen Federabschnitten ausgestattet ist. Ein so ausgebildeter Meßkörper ermöglicht Messungen in zwei rechtwinklig zueinander verlaufenden Achsen.

Im Rahmen der Erfindung kann der Meßkörper selbstverständlich auch für das Messen in drei senkrecht zueinander verlaufenden Achsen ausgerüstet sein. In diesem Falle bedarf es einerseits der bereits erwähnten beiden rechtwinklig zueinander wirksamen Federabschnitte und zusätzlich eines weiteren Federabschnittes, der in einer Richtung senkrecht zu den beiden anderen Wirkrichtungen wirkt.

Zweckmäßigerweise handelt es sich bei den als Schwächungszonen ausgebildeten Federabschnitte des erfindungsgemäßen Meßkörpers um Parallelfedern, die eine besonders präzise Führung des mit der Halterung zum Einspannen des Tasters ausgerüsteten Meßkörperbereichs vermitteln.

Eine andere wichtige Ausgestaltung der Erfindung sieht vor, daß der Meßkörper einstückig ausgebildet ist. Bei dieser Ausgestaltung sind die als Federabschnitte ausgebildeten Schwächungszonen durch Materialabtrag hergestellt.

Insbesondere kann der einstückig ausgebildete Meßkörper eine C-förmige Konfiguration mit einem zwei Schenkel miteinander verbindenden Steg mit einem Befestigungsabschnitt aufweisen, welcher Befestigungsabschnitt sich von dem vom Steg entfernten Ende des einen Schenkels forterstreckt, und der diesem Schenkel gegenüberliegende Schenkel ist dann mit der Halterung zum Einspannen des Tasters versehen und der Steg und/oder der erstgenannte Schenkel sind mit als Federabschnitte ausgebildeten Schwächungszonen ausgerüstet.

Bei einer sinnvollen Weiterbildung der zuletzt erörterten Ausgestaltung sind im Bereich der als Federabschnitte ausgebildeten Schwächungszonen der Steg und/oder der eine Schenkel des Meßkörpers unter Belassung blattfederartiger Randbereiche von Ausnehmungen durchdrungen. Diese beim Einbringen der Ausnehmungen belassenen blattfederartigen Randbereiche bilden dann Parallelfedern.

Dabei hat sich als zweckmäßig erwiesen, wenn der die beiden Schenkel miteinander verbindende Steg des Meßkörpers von zwei in Steglängsrichtung im Abstand voneinander angeordneten Ausnehmungen durchbrochen ist, die rechtwinklig zueinander verlaufen.

Wenn nach einer anderen Weiterbildung die Ausnehmung in dem den Befestigungsabschnitt des Meßkörpers mit dessen Steg verbindenden Schenkel eine Länge größer als das Abstandsmaß zwischen dem Befestigungsabschnitt und dem Steg aufweist, führt dies zu einer ausgeprägten Empfindlichkeit der Meßvorrichtung quer zu den von den anderen Federabschnitten vermittelten Meßachsen. Diese Empfindlichkeit kann noch dadurch gesteigert werden, daß unmittelbar an den die Ausnehmung auf der zu dem anderen Schenkel des Meßkörpers begrenzenden Seite des blattfederartigen Randbereichs sich je ein Einschnitt in den Steg und den Befestigungsbereich hineinerstreckt.

Eine andere wichtige Weiterbildung ist dadurch gekennzeichnet, daß sich parallel zu wenigstens einer Schwächungszone des Meßkörpers ein im Bereich des einen Endes der Schwächungszone fest eingespannter Hebelarm erstreckt, der gegenüber einem anderen Meßkörperteil quer zu seiner Längserstreckung verspannbar ist.

Mittels eines derartigen Hebelarms gelingt in Abhängigkeit von dessen Verspannung eine begrenzte Vorverformung der Schwächungszonen und damit eine Justierung der Meßvorrichtung. Dabei kann der Hebelarm sich steginnenseitig parallel zu der Schwächungszone im Steg des Meßkörpers erstrecken und eine Spannschraube an seinem freien Ende angreifen, die ihrerseits in einer Gewindebohrung in einem Fortsatz des einen Meßkörperschenkels aufgenommen ist. Der Hebelarm kann aber auch meßkörperinnenseitig parallel zu der Schwächungszone in dem den Steg des Meßkörpers mit dessen Befestigungsabschnitt verbindenden Schenkel verlaufen und mittels einer an seinem freien Ende angreifenden Spannschraube verspannbar sein, die ihrerseits in einer Gewindebohrung in einem Fortsatz des Befestigungsabschnitts achsparallel zum Meßkörpersteg aufgenommen ist.

Es ist ersichtlich, daß im Rahmen dieser Weiterbildung auch je ein sich parallel zu der Schwächungszone im Steg und parallel zu der Schwächungszone in dem den Befestigungsabschnitt mit dem Steg verbindenden Schenkel erstrecken kann.

Eine nochmalige sinnvolle Weiterbildung ist durch ein Tasterschnellwechselsystem gekennzeichnet, das die Halterung für den Taster bildet und einen mit dem Schenkel des Meßkörpers fest verbindbaren Fortsatz mit einer Tragplatte sowie einen im Zentrum der Tragplatte angeordneten Magneten und eine an der Tragplatte gelagerte, durch Magnetkraft gehaltene Spannplatte aufweist, an der in bekannter Weise der Taster gespannt wird.

Als besonders zweckmäßig hat sich eine Dreipunktlagerung der Spannplatte an der Tragplatte erwiesen. Diese Dreipunktlagerung kann aus in Ausnehmungen der Spannplatte aufgenommenen Lagerkugeln bestehen, die in Umfangsrichtung jeweils um 120° versetzt zueinander angeordnet sind und von denen sich je eine an einer Kegel-, einer Prisma- und einer Planauflagerung der Tragplatte abstützt.

Anhand der beigefügten Zeichnung soll nachstehend eine Ausführungsform der Erfindung erläutert werden. In schematischen Ansichten zeigen:
- Fig. 1: eine seitliche Gesamtansicht der Meßvorrichtung mit einem mittels eines Schlittens quer verstellbar mit dem Ende eines rotatorisch und axialbewegbaren Antriebsarms dreh- und axialfest verbundenen Tastkopf mit einem sich auf der vom Antriebsarm entfernten Seite forterstreckenden Taster,
- Fig. 2: den Antriebsarm und den damit über den Schlitten verbundenen Meßkopf in einer gegenüber Fig. 1 vorgeschobenen Stellung,
- Fig. 3: den Meßkopf mit einem inneren Meßkörper und einem in einer Halterung des Meßkörpers fest eingespannten Taster in einer gegenüber den Fig. 1 und 2 vergrößerten Längsschnittansicht,
- Fig. 4: einen Querschnitt gemäß der Schnittlinie IV-IV in Fig. 3 durch den Meßkopf,
- Fig. 5: in einer perspektivischen Ansicht einen C-förmig ausgebildeten Meßkörper für sich allein, der in der aus Fig. 3 ersichtlichen Weise im Tastkopf aufgenommen ist,
- Fig. 6: in einer Schemadarstellung die Bewegbarkeit der Spitze des Tasters in drei Achsen,
- Fig. 7: in einer Ansicht wie in Fig. 3 einen anderen, für das Messen in zwei rechtwinklig zueinander verlaufenden Achsen ausgelegten Meßkörper und
- Fig. 8: in einer Ansicht wie in Fig. 3 ein Tasterwechselsystem mit Magnethalterung.

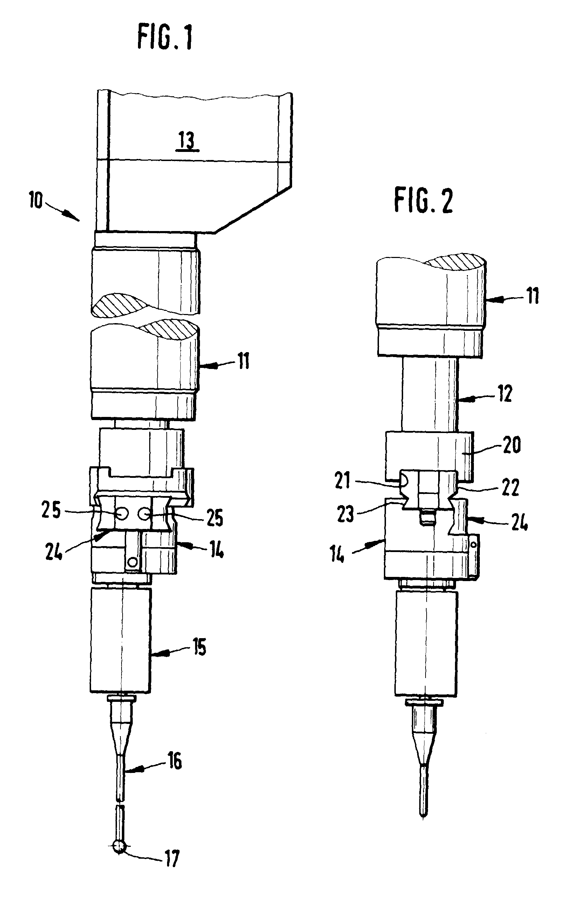

Die im wesentlichen in ihrer Gesamtheit in Fig. 1 veranschaulichte Meßvorrichtung 10 besitzt einen in hier im einzelnen nicht interessierender Weise innerhalb eines Führungsrohrs 11 axialbeweglich und drehbar gelagerten Antriebsarm 12, der mittels je eines in einem Gehäuse 13 aufgenommenen (nicht gezeigten) Antriebsmotors rotatorisch und in axialer Richtung antreibbar ist. Am Ende des Antriebsarms 12 ist mittels eines Schlittens 14, der unten noch näher erläutert wird, ein Tastkopf 15 dreh- und axialfest angeordnet, der sich achsparallel zum Antriebsarm von diesem forterstreckt. Auf der vom Antriebsarm entfernten Seite erstreckt sich vom Tastkopf 15 ein stiftartig ausgebildeter Taster 16 mit einer Tastspitze 17 fort.

Anstelle der in der Zeichnung veranschaulichten geradlinigen Tasterausbildung können selbstverständlich auch abgeknickte Tasterstifte mit seitlich über die Peripherie des Tastkopfes vorstehender Tastspitze eingesetzt werden, die das Abtasten von Zylindern mit großen Radien ermöglichen.

Mit dem Ende des Antriebsarms ist eine Verbindungshülse 20 dreh- und axialfest verbunden, die in einer sich auf der vom Antriebsarm 12 entfernten Seite rechtwinklig zur Längsachse des Antriebsarms erstreckenden Führungsausnehmung 21 ein Führungsstück 22 aufnimmt. Auf der von der Verbindungshülse entfernten Seite besitzt das Führungsstück 22 eine sich quer zur Längsachse des Antriebsarms 12 und parallel zu der Führungsausnehmung 21 erstreckende Schwalbenschwanzführung 23, die von einer Führungsfläche des Schlittens 14 und einer Führungsleiste 24 umgriffen ist.

Diese Führungsleiste stützt sich mit einer in Bezug auf ihre Längserstreckung symmetrischen Führungsfläche am Schlitten 14 ab und ist mit diesem unter Zwischenlage von - in der Zeichnung nicht veranschaulichten - Tellerfederpaketen mittels Befestigungsschrauben 25 verbunden.

Quer einstellbar ist der Schlitten mittels eines sich von der von der Führungsleiste 24 entfernten Seite aus in einer gegenüber der Schwalbenschwanzführung 23 um 90° versetzten Lage rechtwinklig zur Längsachse des Antriebsarms in den Schlitten 14 hineinerstreckenden Einstellzapfens, der innerhalb des Schlittens präzise gelagert und mit einer Verzahnung versehen ist, die mit der Verzahnung einer sich zwischen den schwalbenschwanzartigen Führungsflächen des Führungsstücks erstreckenden und einstückig mit letzterem ausgebildeten Zahnstange zusammenwirkt. Dadurch erfolgt bei Drehung des Einstellzapfens um seine Längsachse eine Querverstellung des Schlittens 14 und damit des Tastkopfs 15 mit dem Taster 16 gegenüber der Längsachse des Antriebsarms. Diese Verstellmittel sind in der Zeichnung nicht veranschaulicht.

Der Tastkopf 15 umfaßt einen langgestreckten Tragkörper 28, der innerhalb eines sich im wesentlichen über seine gesamte Länge erstreckenden Gehäuserohrs 29 aufgenommen sowie an beiden Enden von Stirnwänden 30, 31 abgeschlossen ist. Zwischen diesen Stirnwänden befindet sich ein Aufnahmeraum 32 für einen unten noch zu erläuternden Meßfühler und im Bereich dieses Aufnahmeraums ist der Tragkörper 28 einseitig offen sowie mit einer Lagerkonsole 33 zum Befestigen eines Meßkörpers versehen. Mit der den Tragkörper 28 auf seiner einen Seite abschließenden Stirnwand 30 ist eine Tragplatte 34 mit einem nach der vom Tastkörper wegweisenden Seite vorstehenden Gewindezapfen 35 verschraubt. Dieser Gewindezapfen ist bei am Schlitten 14 montiertem Tastkopf 15 in eine sich von der vom Antriebsarm 12 abgewandten Seite aus achsparallel zum Antriebsarm in den Schlitten hineinerstreckende Gewindebohrung eingeschraubt und vermittelt so die Befestigung des Tastkopfs am Schlitten 14. Die andere Stirnwand des Tragkörpers 28 ist von einer koaxial zu dem Gewindezapfen 35 verlaufenden Ausnehmung 36 durchbrochen.

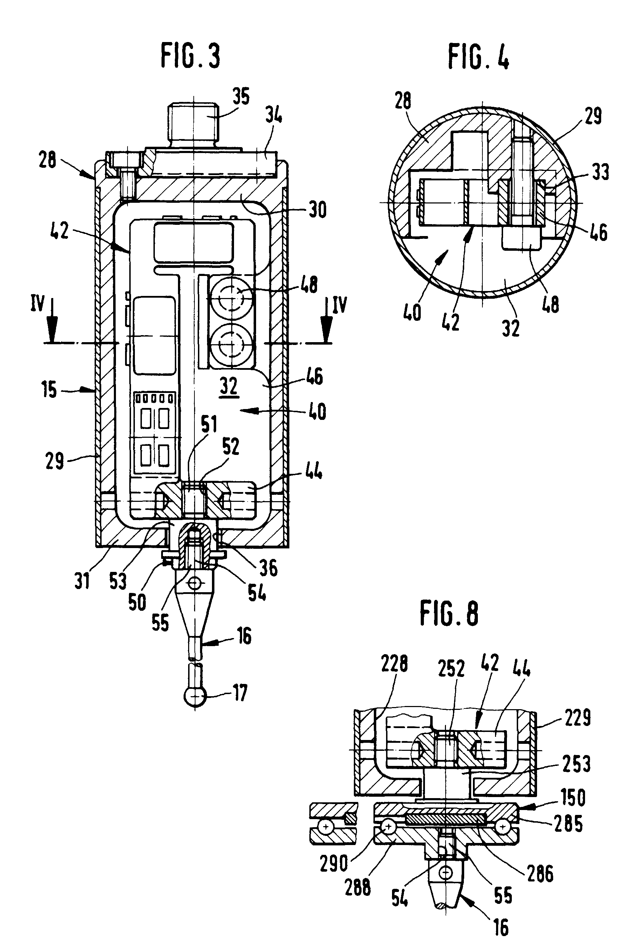

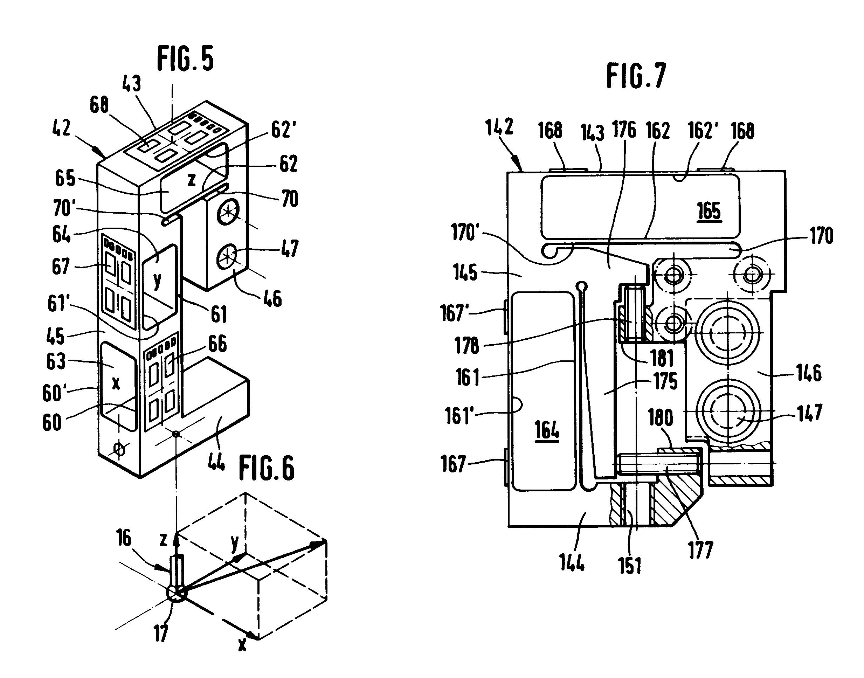

Innerhalb des Tastkopfs 15 befindet sich ein in seiner Gesamtheit mit 40 bezeichneter Meßfühler, der einen in seiner Grundkonfiguration in der aus Fig. 5 ersichtlichen Weise C-förmig ausgebildeten Meßkörper 42 umfaßt. Dieser Meßkörper besitzt einen zwei voneinander entfernte Schenkel 43, 44 miteinander verbindenden Steg 45. Mit dem Ende des einen Schenkels ist ein sich etwa zu dem Steg 45 parallel erstreckender Befestigungsabschnitt 46 verbunden, der mit Schraubenlöchern 47 versehen und mittels in Fig. 3 angedeuteter Befestigungsschrauben 48 an der Lagerkonsole 33 des Tragkörpers 28 eingespannt ist. Der von dem Befestigungsabschnitt entfernte Schenkel 44 ist mit einer Halterung 50 für den sich auf der vom Antriebsarm 12 entfernten Seite vom Tastkopf 15 forterstreckenden Taststift 16 ausgerüstet. Diese Halterung besteht aus einer mittels eines Gewindezapfens 51 in einer Gewindebohrung 52 in dem genannten Schenkel aufgenommenen Hülse 53, die nach der vom Befestigungsabschnitt des Meßkörpers 42 entfernten Seite vorsteht und sich durch die Ausnehmung 36 in der vom Antriebsarm entfernten Stirnwand 31 des Tragkörpers 28 mit Spiel hindurcherstreckt sowie ihrerseits mit einer Innengewinde aufweisenden Sacklochbohrung 54 versehen ist. Diese Sacklochbohrung nimmt einen eingeschraubten Gewindezapfen 55 des Tasters 16 auf, der sich auf der

von der Tasterspitze 17 entfernten Seite vom Taster forterstreckt.

Der Meßkörper 42 ist lediglich mit seinem Befestigungsabschnitt 46 mittels der Befestigungsschrauben 48 fest an der Lagerkonsole 33 des Tragkörpers 28 angeschraubt, im übrigen aber mit allseitigem Spiel innerhalb des Aufnahmeraums 32 des Tragkörpers aufgenommen. In dem an den Befestigungsabschnitt 46 angrenzenden Schenkel 43 und beabstandet voneinander in dem die beiden Schenkel 43, 44 miteinander verbindenden Steg 45 sind, wie wiederum Fig. 5 am besten zeigt, aus jeweils zwei beabstandet parallel zueinander verlaufenden Blattfedern 60, 60', 61, 61' und 62, 62' angeordnet. Jedes Blattfederpaar begrenzt eine den Steg 45 bzw. den Schenkel 43 durchbrechende Ausnehmung 63, 64, 65 und besteht aus auf einander gegenüberliegenden Seiten beim Einbringen der Ausnehmungen belassenen Randbereichen.

Der in Fig. 5 veranschaulichte Meßkörper 42 ist für einen in drei Achsen messenden Tastkopf ausgelegt. Die den Steg 45 beabstandet voneinander durchbrechenden Ausnehmungen 63, 64 verlaufen ebenfalls rechtwinklig zueinander und demgemäß wirken die diese Ausnehmungen begrenzenden Blattfederpaare rechtwinklig zueinander und ermöglichen ein Messen in Richtung der in der Schemadarstellung in Fig. 6 angedeuteten X- und Y-Koordinaten. Die Ausnehmung 65 im Schenkel 43 verläuft parallel zur Ausnehmung 64 im Steg 45 und die diese Ausnehmung begrenzenden Parallelfedern 62, 62' ermöglichen das Messen in einer zu den beiden vorgenannten Koordinaten rechtwinkligen Koordinate, die in Fig. 6 als Z-Koordinate bezeichnet ist.

Der vorstehend erörterte Meßkörper 42 besteht aus hochfestem Aluminium und die Ausnehmungen 60, 61, 62 mit den die Schwächungszonen bildenden Parallelfedern sind durch Erodieren in solcher Weise in den Steg 45 bzw. in den einen Schenkel 43 eingebracht, daß die stehen belassenen Randbereiche dünnwandige Blattfedern bilden. Jeweils eine Blattfeder eines Federpaares ist außenseitig in bekannter Weise mit in Brückenanordnung aufgeklebten Dehnungsmeßstreifen 66, 67, 68 ausgerüstet, die beim Messen auftretende Deformationen der Blattfedern erfassen und als Maß für die zu ermittelnden Meßwerte dienen. Ferner erstreckt sich unmittelbar angrenzend an die Blattfeder 62 je ein Einschnitt 70, 70' in den Steg 45 und den Befestigungsabschnitt 46 hinein.

Wenn die in Fig. 6 angedeutete Spitze 17 des Taststiftes 16 beim Abtasten einer zu vermessenden Oberfläche Bewegungen in Richtung der X-Koordinate erfährt, führt dies zu Deformationen der vom Befestigungsabschnitt entfernten Schwächungszone in dem die Schenkel miteinander verbindenden Steg 45, also zu einer elastischen Verformung der Parallelfedern 60, 60'. Bewegungen der Tastspitze in Richtung der Y-Koordinate bewirken hingegen Deformationen der zweiten Schwächungszone im Meßkörpersteg und mithin Verformungen der Parallelfedern 61, 61'. Taststiftbewegungen in Richtung der Z-Koordinate führen hingegen zu Verformungen der in dem sich zwischen dem Steg 45 und dem Befestigungsabschnitt 46 erstreckenden Schenkel 43 und damit zu elastischen Verformungen der die Ausnehmung 65 begrenzenden Parallelfedern 62, 62'. Angesichts der Ausbildung der die Ausnehmungen 63, 64, 65 begrenzenden Parallelfedern als dünnwandige Blattfedern ist der Meßkörper 42 für große Meßwege der Tasterspitze 17 ausgelegt.

In Fig. 7 sind für gleiche Teile wie in Fig. 5 die gleichen Bezugszeichen verwendet, zur Unterscheidung aber um 100 erhöht.

Der in Fig. 7 in einer seitlichen Ansicht veranschaulichte Meßkörper 142 ist für einen in zwei Achsen messenden Tastkopf bestimmt. Auch dieser Meßkörper ist in seiner Grundkonfiguration C-förmig ausgebildet und besitzt zwei über einen gemeinsamen Steg 145 miteinander verbundene Schenkel 143, 144 und einen sich von dem vom Steg entfernten Ende des einen Schenkels forterstreckenden Befestigungsabschnitt 146, der bei dieser Ausführungsform jedoch bis an den anderen Schenkel heranreicht. Dieser Schenkel ist mit einer Gewindebohrung 151 für eine Halterung zum Einspannen eines Taststiftes ausgerüstet. Der die beiden Schenkel miteinander verbindende Steg 145 ist ebenso wie bei der anderen Ausführungsform unter Belassung dünnwandiger Randbereiche von einer Ausnehmung 164 durchbrochen und mithin mit einer in Richtung der Y-Koordinate wirksamen Schwächungszone ausgerüstet, die aus den Blattfedern 161, 161' besteht. Der sich zwischen dem Steg 145 und dem Befestigungsabschnitt 146 erstreckende Schenkel 143 besitzt ebenfalls eine Schwächungszone aus zwei Blattfedern 162, 162', die eine diesen Schenkel durchbrechende Ausnehmung 165 begrenzen und sich beabstandet voneinander in rechtwinklig zur Längsachse der für die Aufnahme der Halterung zum Einspannen eines Tasters dienenden Gewindebohrung 151 verlaufenden Ebenen erstrecken. Es handelt sich somit um eine in Richtung der Z-Koordinate wirksame Schwächungszone. Wie bei dem Meßkörper 42 sind auch hier auf die jeweils außenliegenden Blattfedern 161' und 162' Dehnungsmeßstreifen 167, 167' und 168, 168' aufgeklebt. Auch bei diesem Meßkörper erstreckt sich unmittelbar angrenzend an die Blattfeder 162 je ein Einschnitt 170, 170' in den Befestigungsabschnitt 146 und den Steg 145 hinein.

Der sich an das vom Steg 145 entfernte Ende des mit der vorgenannten Schwächungszone ausgerüsteten Schenkels 143 anschließende Befestigungsabschnitt 146 ist, ebenso wie bei der anderen Ausführungsform, von zwei Schraubenlöchern 147 durchbrochen und mittels geeigneter Befestigungsschrauben an der Lagerkonsole eines Tastkopfs fest anschraubbar.

Im Unterschied zu dem oben in Verbindung mit den Fig. 3 bis 5 behandelten Meßkörper 42 ist der in Fig. 7 veranschaulichte Meßkörper 142 mit einer Möglichkeit zum Vorspannen der durch die Parallelfedern 161, 161' und 162, 162' gebildeten Schwächungszone ausgelegt. Insofern erstreckt sich jeweils parallel zu der innenliegenden Blattfeder 161, 162 der Schwächungszonen ein Hebelarm 175, 176 fort, an dessen freien Enden jeweils eine Spannschraube 177, 178 angreift. Der Hebelarm 175 reicht nahezu bis an den mit der Gewindebohrung 151 für die Aufnahme einer Taster-Halterung ausgerüsteten Schenkel 144 heran und ist im Bereich des davon entfernten Endes der Ausnehmung 163 eingespannt. Die Spannschraube 177 ist in einer Gewindebohrung aufgenommen, die sich rechtwinklig zur Achse der Bohrung 151 in einem Vorsprung 180 befindet, der sich vom Ende des die Bohrung 151 aufweisenden Schenkels in Richtung auf den anderen Schenkel des Meßkörpers 142 erstreckt. Der Hebelarm 176 ist im Bereich des stegseitigen Endes der Ausnehmung 165 eingespannt und reicht bis nahe an den Befestigungsabschnitt 146 heran. Die an diesen Hebelarm angreifende Spannschraube 178 ist in einer Gewindebohrung in einem sich vom Befestigungsabschnitt in Richtung auf den Steg 145 erstreckenden Vorsprung 181 koaxial zu der Bohrung 151 aufgenommen.

Die Hebelarme 175, 176 sind jeweils mittels der Spannschrauben 177, 178 in Richtung auf die benachbarten Parallelfedern 160, 162 beaufschlagbar. Es ist ersichtlich, daß durch Verspannen der Spannschrauben gegenüber dem jeweiligen Hebelarm die die Schwächungszonen bildenden Parallelfedern zum Zwecke des Justierens verformbar sind.

Bei der oben in Verbindung mit Fig. 3 erläuterten Halterung 50 für den Taster 16 ist letzterer mit einem Gewindezapfen 55 in eine Sackloch-Gewindebohrung 54 eines sich durch eine Ausnehmung 36 in der Stirnwand 31 des Tastkopfs 15 erstreckenden Fortsatzes 53 eingeschraubt und die Halterung besitzt einen in der Gewindebohrung 51 im Schenkel 44 des Meßkörpers aufgenommenen Gewindezapfen 52. Zum Zwecke des Tasterwechsels müssen mithin die Taster mit ihren Gewindeabschnitten aus der genannten Sackloch-Gewindebohrung 54 aus- bzw. eingeschraubt werden.

Im Unterschied dazu veranschaulicht Fig. 8 ein Tasterwechselsystem mit Magnethalterung, bei dem die Bezugszeichen gegenüber Fig. 3 um Zweihundert erhöht sind.

Auch bei diesem Tasterwechselsystem erstreckt sich ein Fortsatz 253, der mittels eines Gewindezapfens 251 in die Gewindebohrung 52 des Meßkörper-Schenkels 44 eingeschraubt ist, durch die Ausnehmung 36 in der Stirnwand 31 des Tragkörpers hindurch. An dem vom Gewindezapfen 252 entfernten Ende ist der Fortsatz 253 mit einer Tragplatte 285 ausgerüstet, die im Zentrum einen Magneten 286 aufweist und zur Lagerung einer Spannplatte 288 dient. Diese Spannplatte bildet bei dem Tasterwechselsystem die eigentliche Halterung für den Taster 16. Sie ist zu diesem Zwecke in ihrem Zentrum mit einer Gewindebohrung 254 versehen, in der in gleicher Weise wie bei der Halterung 50 der Gewindezapfen 55 eines Tasters 16 aufgenommen ist. Zwischen der Trag- und der Lagerplatte wirkt eine Dreipunktlagerung mit in Ausnehmungen der Lagerplatte aufgenommenen Lagerkugeln 290, die in Umfangsrichtung um 120° versetzt zueinander angeordnet sind und von denen sich je eine an einer Kegel-, einer Prisma- und einer Planauflagerung der Platte abstützt.

## Patentansprüche

1. Meßvorrichtung zum Vermessen der Form von Zylindern, die einen am Ende eines mittels Antriebsmotoren translatorisch und rotatorisch bewegbaren Antriebsarms (12) achsparallel zu letzterem angeordneten Meßfühler mit einem Taster (16) zum Abtasten der Geometrie von Zylinderwandungen besitzt,
dadurch gekennzeichnet,
daß der Meßfühler einen in einem Tastkopf (15) aufgenommenen Meßkörper (42, 142) umfaßt, welcher Meßkörper (42,142) mit einer Halterung zum biege- und axialfesten, jedoch lösbaren, Einspannen des als langgestreckten Taststift ausgebildeten Tasters (16) versehen und beabstandet von der Halterung für den Taster (16) im Bereich eines Befestigungsabschnitts (46, 146) im Tastkopf (15) fest eingespannt sowie mit wenigstens einer zwischen der Halterung und dem Befestigungsabschnitt angeordneten, als mit Dehnungsmeßstreifen ausgerüsteter Federabschnitt ausgebildeten Schwächungszone (60, 60'; 61, 61'; 62, 62' bzw. 161, 161'; 162, 162') versehen ist.

2. Meßvorrichtung nach Anspruch 1, dadurch gekennzeichnet, daß der Meßkörper (42, 142) mit wenigstens zwei beabstandet voneinander angeordneten und rechtwinklig zueinander wirksamen Federabschnitten (60, 60'; 61, 61'; 62, 62' bzw. 161, 161'; 162, 162') versehen ist.

3. Meßvorrichtung nach Anspruch 1 oder 2, dadurch gekennzeichnet, daß es sich bei den Federabschnitten um Parallelfedern (60, 60'; 61, 61'; 62, 62' bzw. 161, 161'; 162, 162') handelt.

4. Meßvorrichtung nach einem der Ansprüche 1 bis 3, dadurch gekennzeichnet, daß der Meßkörper (42, 142) einstückig ausgebildet ist.

5. Meßvorrichtung nach Anspruch 4, dadurch gekennzeichnet, daß der Meßkörper (42, 142) eine C-förmige Konfiguration mit einem zwei Schenkel (43, 44; 143, 144) miteinander verbindenden Steg (45, 145) sowie einem Befestigungsabschnitt (46, 146) aufweist, der sich von dem vom Steg entfernten Ende des einen Schenkels (43, 143) forterstreckt, daß der diesem Schenkel gegenüberliegende Schenkel (44, 144) mit der Halterung (50, 150) zum Einspannen des Tasters (16) versehen ist und daß der Steg und/oder der erstgenannte Schenkel als Federabschnitte (60, 60'; 61, 61'; 62, 62' bzw. 161, 161'; 162, 162') ausgebildete Schwächungszonen aufweisen.

6. Meßvorrichtung nach Anspruch 5, dadurch gekennzeichnet, daß im Bereich der als Federabschnitte ausgebildeten Schwächungszonen der Steg (45, 145) und/oder der eine Schenkel (43, 143) des Meßkörpers unter Belassung blattfederartiger Randbereiche von Ausnehmungen (63, 64, 65; 164, 165) durchdrungen ist.

7. Meßvorrichtung nach Anspruch 5 oder 6, dadurch gekennzeichnet, daß der die beiden Schenkel (43, 44) miteinander verbindende Steg (45) des Meßkörpers (42) von zwei in Steglängsrichtung im Abstand voneinander angeordneten Ausnehmungen (63, 64) durchbrochen ist, die rechtwinklig zueinander verlaufen.

8. Meßvorrichtung nach einem der Ansprüche 5 bis 7, dadurch gekennzeichnet, daß die Ausnehmung (65, 165) in dem den Befestigungsabschnitt (46, 146) des Meßkörpers mit dessen Steg (45, 145) verbindenden Schenkel (43, 143) eine Länge größer als das Abstandsmaß zwischen dem Befestigungsabschnitt und dem Steg aufweist.

9. Meßvorrichtung nach Anspruch 8, dadurch gekennzeichnet, daß unmittelbar an den die Ausnehmung (65, 165) auf der zu dem anderen Schenkel (44, 144) des Meßkörpers (42, 142) begrenzenden Seite des blattfederartigen Randbereichs sich je ein Einschnitt (70, 70'; 170, 170') in den Steg (45, 145) und den Befestigungsabschnitt (46, 146) hineinerstreckt.

10. Meßvorrichtung nach einem der Ansprüche 5 bis 9, dadurch gekennzeichnet, daß sich parallel zu wenigstens einer Schwächungszone (161, 161'; 162, 162') des Meßkörpers (42, 142) ein im Bereich des einen Endes der Schwächungszone fest eingespannter Hebelarm (175, 176) erstreckt, der gegenüber einem anderen Meßkörperteil quer zu seiner Längserstreckung verspannbar ist.

11. Meßvorrichtung nach Anspruch 10, dadurch gekennzeichnet, daß der Hebelarm (175) sich meßkörperinnenseitig parallel zu der Schwächungszone (161, 161') im Steg (145) erstreckt und mittels einer an seinem freien Ende angreifenden, ihrerseits in einer Gewindebohrung in einem Fortsatz (180) des Meßkörperschenkels (144) aufgenommenen Spannschraube (177) verspannbar ist.

12. Meßvorrichtung nach Anspruch 10, dadurch gekennzeichnet, daß der Hebelarm (176) meßkörperinnenseitig parallel zu der Schwächungszone (162, 162') in dem den Steg (145) mit dem Befestigungsabschnitt (146) verbindenden Schenkel (143) erstreckt und mittels einer an seinem feien Ende angreifenden, ihrerseits in einer Gewindebohrung in einem Fortsatz (181) des Befestigungsabschnittes achsparallel zum Meßkörpersteg aufgenommenen Spannschraube (178) verspannbar ist.

13. Meßvorrichtung nach einem der Ansprüche 1 bis 12, gekennzeichnet durch ein Tasterschnellwechselsystem als Halterung (150) für den Taster (16), das einen mit dem einen Schenkel (44, 144) des Meßkörpers (42, 142) fest verbindbaren Fortsatz (253) mit einer Tragplatte (285) sowie einen im Zentrum der Tragplatte angeordneten Magneten (286) und eine an der Tragplatte gelagerte, durch Magnetkraft gehaltene Spannplatte (288) aufweist.

14. Meßvorrichtung nach Anspruch 13, gekennzeichnet durch eine Dreipunktlagerung der Spannplatte (288) an der Tragplatte (285).

15. Meßvorrichtung nach Anspruch 14, dadurch gekennzeichnet, daß die Dreipunktlagerung aus in Ausnehmungen der Spannplatte (288) aufgenommenen Lagerkugeln (290) besteht, die in Umfangsrichtung jeweils um 120° versetzt zueinander angeordnet sind und von denen sich je eine an einer Kegel-, einer Prisma- und einer Planauflagerung der Tragplatte (285) abstützt.

## Claims

1. Measuring device for measuring the shape of cylinders, which device has a measuring feeler, which is arranged at the end of a drive arm (12), which is movable translationally and rotationally by means of drive motors, and axially parallelly to the drive arm (12), with a tracing member (16) for the scanning of the geometry of cylinder walls, characterised thereby, that the measuring feeler comprises a measuring body (42, 142), which is received in a tracer head (15), is provided with a mount for the inflexible and axially firm, yet detachable clamping-in of the tracing member (16) formed as elongate tracer and which is firmly clamped in in the region of a fastening portion (46, 146) in the tracer head (15) at a spacing from the mount for the tracing member (16) as well as is provided with at least one weakened zone (60, 60'; 61, 61'; 62, 62' or 161, 161'; 162, 162'), which is formed as spring portion equipped with strain gauges and arranged between the mount and the fastening portion.

2. Measuring device according to claim 1, characterised thereby, that the measuring body (42, 142) is provided with at least two spring portions (60, 60'; 61, 61'; 62, 62' or 161, 161'; 162, 162'), which are arranged at a spacing one from the other and effective each at right angles to the other.

3. Measuring device according to claim 1 or 2, characterised thereby, that parallel springs (60, 60'; 61, 61'; 62, 62' or 161, 161'; 162, 162') are concerned in the case of the spring portions.

4. Measuring device according to one of the claims 1 to 3, characterised thereby, that the measuring body (42, 142) is formed in one piece.

5. Measuring device according to claim 4, characterised thereby, that the measuring body (42, 142) displays a C-shaped configuration with a web (45, 145) connecting two limbs (43, 44; 143; 144) each with the other as well as a fastening portion (46, 146), which extends forth from that end of the one limb (43, 143), which is remote from the web, that the limb (44, 144) lying opposite this limb is provided with the mount for the clamping-in of the tracing member (16) and that the web and/or the first-mentioned limb comprise weakened zones formed as spring portions (60, 60'; 61, 61'; 62, 62' or 161, 161'; 162, 162').

6. Measuring device according to claim 5, characterised thereby, that in the region of the weakened zones formed as spring portions, the web (45, 145) and/or the one limb (43, 143) of the measuring body is penetrated by cut-outs (63, 64, 65; 164, 165) whilst leaving leafspring-like rim regions.

7. Measuring device according to claim 5 or 6, characterised thereby, that the web (42), which connects both the limbs (43, 44) each with the other, of the measuring body (42) is penetrated by two cut-outs (63, 64), which each extend at a right angle to the other and are arranged each at a spacing from the other in the longitudinal direction of the web.

8. Measuring device according to one of the claims 5 to 7, characterised thereby, that the cut-out (65, 165) in the limb (43, 143), which connects the fastening portion (46, 146) of the measuring body with its web (45, 145), displays a length greater than the measure of the spacing between the fastening portion and the web.

9. Measuring device according to claim 8, characterised thereby, that a respective incision (70, 70'; 170, 170') extends into the web (45, 145) and the fastening portion (46, 146) directly at that side of the leafspring-like rim region, which bounds the cut-out (65, 165) from the other limb (44, 144) of the measuring body (42, 142).

10. Measuring device according to one of the claims 5 to 9, characterised thereby, that a lever arm (175, 176), which is firmly clamped in in the region of the one end of the weakened zone and is tightenable transversely to its longitudinal extent and relative to another measuring body part, extends parallelly to at least one weakened zone (161, 161', 162, 162') of the measuring body (42, 142).

11. Measuring device according to claim 10, characterised thereby, that the lever arm (175) extends at the inward side of the measuring body parallelly to the weakened zone (161, 161') in the web (145) and is tightenable by means of a tightening screw (177), which engages at its free end and is in turn received in a threaded bore in a prolongation (180) of the measuring body limb (144).

12. Measuring device according to claim 10, characterised thereby, that the lever arm (176) extends at the inward side of the measuring body parallelly to the weakened zone (162, 162') in the limb (143) connecting the web (145) with the fastening portion (146) and is tightenable by means of a tightening screw (178), which engages at its free end and is in turn received in a threaded bore in a prolongation (181) of the fastening portion to be axially parallel to the measuring body web.

13. Measuring device according to one of the claims 1 to 12, characterised by a quick-change tracing member system as mount (150) for the tracing member (16), which system comprises a prolongation (253), which is firmly connectable with the one limb (44, 144) of the measuring body (42, 142), with a carrier plate (285) as well as a magnet (286) arranged in the centre of the carrier plate and a clamping plate (288) borne at the carrier plate and retained by magnetic force.

14. Measuring device according to claim 13, characterised by a three-point bearing of the clamping plate (288) at the carrier plate (285).

15. Measuring device according to claim 14, characterised thereby, that the three-point bearing consists of bearing balls (290), which are received in recesses of the clamping plate (288) and are arranged to be displaced one relative to the other each time by 120° in circumferential direction and of which a respective one bears on a conical support surface, a prismatic support surface and a planar support surface of the carrier plate (285).

## Revendications

1. Dispositif de mesure, destiné à mesurer la forme de cylindres, qui possède un capteur de mesure, disposé à l'extrémité d'un bras d'entraînement (12), pouvant subir un mouvement de translation et de rotation à l'aide de moteurs d'entraînement, capteur de mesure dont l'axe est parallèle à celui du bras d'entraînement, et comportant aussi un palpeur (16), destiné à explorer la géométrie de parois de cylindre, caractérisé en ce que le capteur de mesure comporte un corps de mesure (42, 142), logé dans une tête de palpeur (15), lequel corps de mesure (42, 142) est pourvu d'une attache destinée au serrage, rigide en flexion et en translation axiale, mais amovible, du palpeur (16) configuré comme une tige de palpeur ayant une extension longitudinale, et est serré à demeure à une certaine distance de l'attache destinée au palpeur (16), dans la zone d'un segment de fixation (46, 146) de la tête de palpeur (15), et possède au moins une zone d'affaiblissement (60, 60' ; 61, 61' ; 62, 62' ou 161, 161' ; 162, 162'), disposée entre l'attache et le segment de fixation, et configurée comme un segment élastique muni de jauges extensométriques.

2. Dispositif de mesure selon la revendication 1, caractérisé en ce que le corps de mesure (42, 142) possède au moins deux segments élastiques (60, 60' ; 61, 61' ; 62, 62' ou 161, 161' ; 162, 162'), agissant perpendiculairement l'un à l'autre et disposés à une certaine distance l'un de l'autre.

3. Dispositif de mesure selon la revendication 1 ou 2, caractérisé en ce que, pour ce qui concerne les segments élastiques, il s'agit de ressorts parallèles (60, 60' ; 61, 61' ; 62, 62' ou 161, 161' ; 162, 162').

4. Dispositif de mesure selon l'une des revendications 1 à 3, caractérisé en ce que le corps de mesure (42, 142) est formé d'une seule pièce.

5. Dispositif de mesure selon la revendication 4, caractérisé en ce que le corps de mesure (42, 142) a une configuration en C avec une traverse (45, 145) reliant l'une à l'autre deux branches (43, 44 ; 143, 144) et un segment de fixation (46, 146), lequel s'étend à partir de l'extrémité de l'une des branches (43, 143) éloignée de la traverse ; que la branche (44, 144) opposée à cette branche est pourvue de l'attache (50, 150) destinée à serrer le palpeur (16) ; et que la traverse et/ou la première branche mentionnée ci-dessus comportent des zones d'affaiblissement configurées sous forme de segments élastiques (60, 60' ; 61, 61' ; 62, 62' ou 161, 161' ; 162, 162').

6. Dispositif de mesure selon la revendication 5, caractérisé en ce que, dans les zones d'affaiblissement configurées comme des segments élastiques, la traverse (45, 145) et/ou l'une des branches (43, 143) du corps de mesure est traversée par des évidements (63, 64, 65 ; 164, 165), qui dégagent des zones marginales du type ressort à lames.

7. Dispositif de mesure selon la revendication 5 ou 6, caractérisé en ce que la traverse (45) du corps de mesure (42), traverse reliant l'une à l'autre les deux branches (43, 44), est traversée par deux évidements (63, 64), disposés à une certaine distance l'un de l'autre dans la direction longitudinale de la traverse, et qui sont perpendiculaires l'un à l'autre.

8. Dispositif de mesure selon l'une des revendications 5 à 7, caractérisé en ce que l'évidement (65, 165) aménagé dans la branche (43, 143) qui relie le segment de fixation (46, 146) du corps de mesure à sa traverse (45, 145) a une longueur supérieure à l'écartement entre le segment de fixation et la traverse.

9. Dispositif de mesure selon la revendication 8, caractérisé en ce que des entailles (70, 70' ; 170, 170') pénètrent dans la traverse (45, 145) et dans le segment de fixation (46, 146) au niveau de l'évidement (65, 165), sur le côté de la zone marginale du type ressort à lames contigu à l'autre branche (44, 144) du corps de mesure (42, 142).

10. Dispositif de mesure selon l'une des revendications 5 à 9, caractérisé en ce que, parallèlement à au moins une zone d'affaiblissement (161, 161' ; 162, 162') du corps de mesure (42, 142), s'étend un bras de levier (175, 176), serré à demeure au niveau de l'une des extrémités de la zone d'affaiblissement, bras de levier qui peut être assujetti à une autre pièce du corps de mesure, transversalement à son étendue longitudinale.

11. Dispositif de mesure selon la revendication 10, caractérisé en ce que le bras de levier (175) s'étend, sur le côté intérieur du corps de mesure, parallèlement à la zone d'affaiblissement (161, 161') dans la traverse (145), et peut être vissé à l'aide d'une vis de serrage (177), qui agit au niveau de son extrémité libre et qui pour sa part est logée dans un trou taraudé aménagé dans un prolongement (180) de la branche (144) du corps de mesure.

12. Dispositif de mesure selon la revendication 10, caractérisé en ce que le bras de levier (176), sur le côté intérieur du corps de mesure, s'étend parallèlement à la zone d'affaiblissement (162, 162') dans la branche (143) qui relie la traverse (145) au segment de fixation (146), et peut être serré à l'aide d'une vis de serrage (178) qui agit au niveau de son extrémité libre et qui pour sa part est logée dans un trou taraudé aménagé dans un prolongement (181) du segment de fixation, vis de serrage dont l'axe est parallèle à celui de la traverse du corps de mesure.

13. Dispositif de mesure selon l'une des revendications 1 à 12, caractérisé par un système de remplacement rapide des palpeurs, sous forme d'une attache (150) destinée au palpeur.(16), système qui comporte un prolongement (253), pouvant être relié à demeure à une branche (44, 144) du corps de mesure (42, 142), avec une plaque d'appui (285) et un aimant (286) disposé au centre de la plaque d'appui, ainsi qu'une plaque de serrage (288) logée sur la plaque d'appui et maintenue par la force d'un aimant.

14. Dispositif de mesure selon la revendication 13, caractérisé en ce que la plaque de serrage (288) s'appuie sur la plaque d'appui (285) selon un appui en trois points.

15. Dispositif de mesure selon la revendication 14, caractérisé en ce que l'appui en trois points est constitué de billes de roulement (290) logées dans des évidements de la plaque de serrage (288), billes qui sont disposées en étant décalées de 120° les unes les autres dans la direction périphérique, et dont chacune s'appuie contre un support conique, prismatique ou plan de la plaque d'appui (285).
